# EUROPÄISCHE PATENTSCHRIFT

(11) **EP 1 700 464 B1**
(45) Veröffentlichungstag und Bekanntmachung des Hinweises auf die Patenterteilung: **13.05.2009**
(21) Anmeldenummer: 05715265.4
(22) Anmeldetag: 07.02.2005
(51) Int. Cl.: H04M 3/22

(54) **VERFAHREN UND VORRICHTUNG ZUR QUALIT TSBEURTEILUNG EINES AUD IOSIGNALS UND VORRICHTUNG UND VERFAHREN ZUM ERHALTEN EINES QUALIT TSBEURTEILUNGSERGEBNISSES**
METHOD AND DEVICE FOR EVALUATING THE QUALITY OF AN AUDIO SIGNAL AND DEVICE AND METHOD FOR RECEIVING THE RESULT OF A QUALITY EVALUATION
PROCEDE ET DISPOSITIF POUR EVALUER LA QUALITE D'UN SIGNAL AUDIO, PROCEDE ET DISPOSITIF POUR OBTENIR LE RESULTAT D'UNE EVALUATION DE QUALITE

(30) Priorität: 19.02.2004 DE 102004008207
(43) Veröffentlichungstag der Anmeldung: 13.09.2006
(73) Patentinhaber: Opticom, Dipl.-Ing. Michael Keyhl GmbH, 91052 Erlangen (DE)
(72) Erfinder: SCHMIDMER, Christian, 90491 Nürnberg (DE); KASTNER, Martin, 90762 Fürth (DE); KEYHL, Michael, 90562 Heroldsberg (DE)
(74) Vertreter: Zinkler, Franz
(86) Internationale Anmeldenummer: PCT/EP2005/001215
(87) Internationale Veröffentlichungsnummer: WO 2005/091608

(56) Entgegenhaltungen:
- EP-A- 1 228 505
- EP-A- 1 328 106
- WO-A-02/43051

## Beschreibung

Die vorliegende Erfindung bezieht sich auf das Gebiet der Qualitätsbeurteilung von Audiosignalen und insbesondere auf für die Praxis taugliche Qualitätsbeurteilungssysteme für jedermann.

Zur messtechnischen Bewertung der Qualität von codierten Sprach- und Audiosignalen werden heute standardisierte perzeptionsbasierte Messverfahren (Perceptual Measurement) eingesetzt. Bekannte Verfahren sind das sogenannte PESQ-Verfahren (PESQ = Perceptual Evaluation of Speech Quality = gehörrichtige Bewertung der Sprachqualität), das in dem Standardisierungsdokument ITU-T P.862 (02/2001) beschrieben ist. Ein anderes bekanntes Messverfahren zur Qualitätsbeurteilung ist das sogenannte PEAQ-Verfahren (PEAQ = Objective Measurements of Perceived Audio Quality = objektive Messungen der wahrgenommenen Audioqualität) ist in dem Standardisierungsdokument Rec. ITU-R BS. 1387-1 (1998-2001) dargestellt. Diesen Verfahren bzw. weiteren Verfahren zur Qualitätsbeurteilung ist gemeinsam, dass ein zu testendes Signal ("Testsignal"), das in der Regel das Ausgangssignal eines Systems oder Netzwerks oder allgemein eines zu untersuchenden Elements (DUT) ist, mit einem Original- oder auch Referenzsignal, das in der Regel das Eingangssignal in das zu testende DUT ist, verglichen wird.

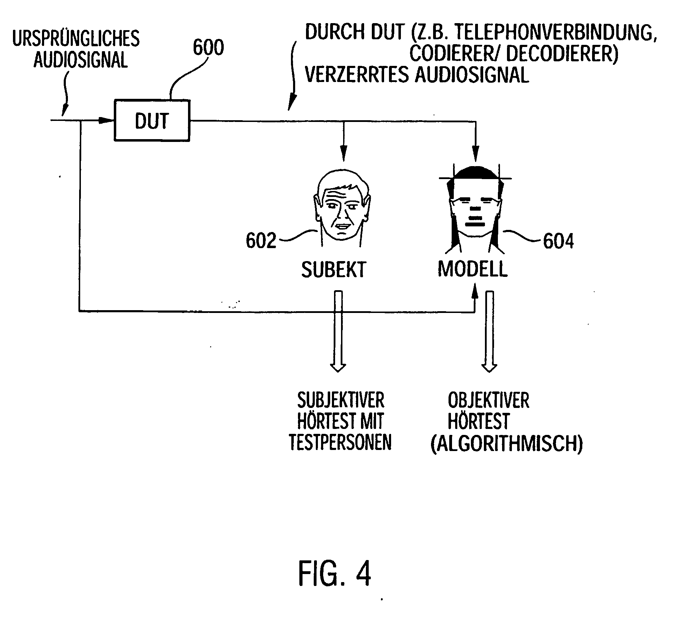

Ein solches allgemeines "Setting" ist in Fig. 4 dargestellt. Das ursprüngliche Audiosignal, das in ein DUT 600 eingespeist wird, stellt hierbei das Referenzsignal oder Eingangssignal dar, während das Ausgangssignal hinter dem DUT 600 dazu verwendet wird, um entweder einen subjektiven Hörtest mit Testpersonen durchzuführen, wie es durch ein Subjekt 602 angedeutet ist, oder ein Qualitätsbeurteilungsverfahren, wie beispielsweise PESQ oder PEAQ durchzuführen, wie es durch ein Modell 604 dargestellt ist. Durch Zuführung des Ausgangssignals aus dem DUT 600 zu dem Subjekt 602 ist somit ein subjektiver Hörtest durchführbar, der typischerweise mit mehreren Testpersonen in standardisierten Räumen durchgeführt wird. Durch Zuführung des ursprünglichen Audiosignals vor dem DUT 600, also des Referenzsignals, und des durch das DUT verzerrten Audiosignals zu dem Modell 604 kann ein objektiver Test, also eine algorithmische Evaluierung ohne subjektive Testpersonen, durchgeführt werden.

Das DUT 600 ist typischerweise ein System, dessen Einfluß auf die Audioqualität bewertet werden soll. Ein solches System ist beispielsweise eine Telekommunikationsverbindung und insbesondere eine Telephonverbindung, die drahtlos oder drahtgebunden sein kann. Ein alternatives DUT 600 ist beispielsweise eine Codierer/Decodiererstrecke, um die Qualitätsbeeinträchtigung eines Codierkonzepts mit nachgeschaltetem Decodierkonzept zu beurteilen. Die Ausgabe des Modells soll, wenn das Modell im beabsichtigen Rahmen arbeitet, eine Vorhersage der wahrgenommenen Qualität sein, die Testpersonen, wenn sie das Ausgangssignal des DUT 600 hören, auf einer Skala subjektiv angeben würden.

Beim PESQ-Verfahren beispielsweise wird das ursprüngliche Audiosignal, also das Audiosignal vor dem DUT 600, das das Referenzsignal ist, unter Berücksichtigung einer zeitlichen Verzögerung (Delay), mit dem durch das DUT 600 verzerrten Audiosignal verglichen, wobei ein psychoakustisches Modell eingesetzt wird. Insbesondere werden sowohl das ursprüngliche Audiosignal vor dem DUT 600 als auch das verzerrte Audiosignal nach dem DUT 600 in eine sogenannte interne Darstellung umgewandelt, die analog zu der psychophysischen Darstellung von Audiosignalen im menschlichen Gehörsystem ist, wobei insbesondere Parameter wie die Bark-Skala und die Lautheit (Sone) berücksichtigt werden, wie es in der Technik bekannt ist. Die interne psychophysikalische Darstellung des ursprünglichen Audiosignals wird dann mit der internen psychophysikalischen Darstellung des verzerrten Audiosignals verglichen, um je nach Modell einen oder mehrere Fehlerparameter zu berechnen, die eine quantitative Qualitätsaussage zulassen.

Ein anhand von Fig. 4 dargestelltes Qualitätsbeurteilungsverfahren wird auch als "intrusives" Verfahren bezeichnet, da eine Einspeisung des Referenzsignals, also des ursprünglichen Audiosignals, in das zu testende System (DUT 600) notwendig ist. Am Ausgang des DUT erhält man dann, wie es ausgeführt worden ist, das zu bewertende Testsignal, das in Fig. 4 auch als verzerrtes Audiosignal bzw. allgemein als Audiosignal bezeichnet wird. Der Ausgang des DUT 600 kann beispielsweise das ferne Ende einer Telephonverbindung zweier Teilnehmer sein, wobei das ursprüngliche Audiosignal am nahen Ende als Referenzsignal eingespeist wird. In diesem Fall würde das Messverfahren wie beispielsweise PESQ, die Sprachqualität einer Telephonverbindung charakterisieren.

Wie es ausgeführt worden ist, basieren die algorithmischen Messverfahren auf einer Kombination von psychoakustischen und kognitiven Erkenntnissen über die menschliche Gehörwahrnehmung. Das zugrundeliegende Experiment dieser Verfahren besteht zunächst darin, dass ein subjektiver Hörtest durchgeführt wird, in dem eine statistisch ausreichende Anzahl von Testhörern ("Subjects") eine Reihe von Sprach- bzw. Audiosequenzen zur Beurteilung vorgeführt wird. Die Tester bewerten diese Sequenzen mittels einer diskreten bzw. kontinuierlichen Qualitätsskala, die in der Technik auch als "Opinion Scale" bezeichnet wird und beispielsweise von 1 ("bad") bis 5 ("excellent") reicht. Solche subjektiven Hörtests sind beispielsweise in dem Standardisierungsdokument ITU-T P.800 (08/1996) dargestellt.

Konsequenterweise sind daher in standardisierten Testprozeduren, wie beispielsweise in dem Standardisierungsdokument Rec. ITU-R BS.1116-1 oder Rec. ITU-R BS.1534, Testsequenzen vorgeschrieben, die eine Dauer von typischerweise zwischen 8 und 12 Sekunden haben, deren maximale Länge jedoch 20 Sekunden nicht überschreitet. Diese Testsequenzen sind zwar reale Signale, sie sind jedoch nicht stochastisch bzw. zufällig aus einem realen Szenario stammend, sondern standardisierte vorgegebene Testsequenzen, die in einem Experiment in das zu betrachtende DUT eingespeist werden können, um das Test-Eingangssignal, also das durch das DUT verzerrte Audiosignal zu gewinnen.

In jüngster Zeit wurden Entwicklungen vorgestellt, die es erlauben, auch nicht-intrusive Tests durchzuführen, die also eine Schätzung der Sprachqualität ausschließlich aufgrund einer Analyse des Testsignals auf der Empfangsseite, also ohne Einspeisung eines Referenzsignals auf der Sendeseite, ermöglichen sollen. Solche Entwicklungen sind für praktische Realisierungen von besonderem Vorteil, da sie beispielsweise eine Aussage über die Sprachqualität einer Mobilfunkverbindung einzig im Endgerät zulassen, ohne dass irgendwelche messtechnischen Anordnungen oder Vorkehrungen bzw. Manipulationen im Telephonnetz gewissermaßen zur Einspeisung eines Referenzsignals erforderlich wären. Jedes reale Telephongespräch kann somit prinzipiell mit einem solchen nicht-intrusiven Konzept einer Qualitätsbeurteilung unterzogen werden.

Nachdem sowohl intrusive Meßverfahren als auch insbesondere nicht-intrusive Meßverfahren inzwischen signifikante Ergebnisse liefern, wie es auch durch die schnell fortschreitende Standardisierung dokumentiert wird, besteht nach wie vor die Problematik, wie ein solches System der Allgemeinheit zur Verfügung gestellt werden kann.

Hierbei bieten sich eher nicht-intrusive Meßverfahren an, da dort wenigstens nur das Ausgangssignal des DUT-Kanals 600 (Fig. 4) benötigt wird, während bei intrusiven Meßverfahren zusätzlich noch das ursprüngliche Audiosignal, das nicht durch den Kanal verzerrt wird, benötigt wird.

Darüber hinaus muß zur Qualitätsbeurteilung von Audiosignalen dem Meßgerät das durch einen Kanal verzerrte Audiosignal bereitgestellt werden, wobei gleichzeitig das Qualitätsbeurteilungskonzept nicht nur für einige wenige Spezialanwendungen verfügbar sein soll, wie beispielsweise in einem Labor einer Telephongesellschaft, sondern daß im Prinzip jedermann auf das erfindungsgemäße Qualitätsbeurteilungskonzept zugreifen kann, um eine Qualitätsbeurteilung von von ihm erzeugten Audiosignalen durchführen zu können.

Die EP 1 328 106 A1 offenbart ein Verfahren zum Fernbewerten der Audioqualität eines IP-Sprach-Terminals. Ein IPbasiertes Terminal wird mit einem Audiogerät versehen, das in der Lage ist, Messungen und Berechnungen mit digitalen und analogen Sprachsignalen durchzuführen, die über ein IP-Kommunikationsterminal empfangen oder gesendet werden. Ein Steuerterminal wird mit dem Netzwerk verbunden, mit dem auch der IP-Kommunikationsterminal verbunden ist, um an dem Steuerterminal die Ergebnisse der Mess- und Berechnungsoperationen von zumindest einem Audioqualitätsparameter zu erhalten, der sich auf das Gerät bezieht.

Die Aufgabe der vorliegenden Erfindung besteht darin, ein Qualitätsbeurteilungskonzept zu schaffen, das in seiner Anwendung flexibel und einfach erreichbar ist.

Diese Aufgabe wird durch eine Vorrichtung zur Qualitätsbeurteilung nach Patentanspruch 1, eine Vorrichtung zum Erhalten eines Qualitätsbeurteilungsergebnisses gemäß Patentanspruch 19, ein Verfahren zur Qualitätsbeurteilung gemäß Patentanspruch 20, ein Verfahren zum Erhalten eines Qualitätsbeurteilungsergebnisses gemäß Patentanspruch 21 oder ein Computer-Programm gemäß Patentanspruch 22 gelöst.

Der vorliegenden Erfindung liegt die Erkenntnis zugrunde, daß Qualitätsbeurteilungskonzepte zur Beurteilung eines Audiosignals, das über einen Audiosignalkanal übertragen worden ist, dadurch flexibel und leicht zugreifbar gemacht werden, wenn sie auf z. B. einer Internet-Plattform bereitgestellt werden, so daß jeder Benutzer, der einen Internet-Zugang hat, ohne weiteres auf das Online-Meßsystem zugreifen kann.

Der Benutzer muß lediglich wissen, daß es ein solches Meßsystem gibt, und an welcher Internet-Adresse er auf das Meßsystem zugreifen kann. Daraufhin kann die Qualitätsbeurteilungsvorrichtung ohne weiteres dem Rechner, der auf die Plattform zugegriffen hat, Kontaktierungsinformationen schicken, die eine Kontaktadresse umfassen. Diese Kontaktadresse ist vorzugsweise eine Telephonnummer eines Meßservers, der selbstverständlich auch entfernt von der Position sein kann, an der die Internet-Plattform physisch lokalisiert ist.

Daraufhin kann der Benutzer durch Einwahl bei dem Meßserver, also bei dem eigentlichen Meßgerät, mittels der Kontaktadresse den zu beurteilenden Audiosignalkanal herstellen. Hierfür hat der Meßserver eine Schnittstelle, die ausgebildet ist, um nach einem Zugriff mit der Kontaktadresse durch den entfernten Benutzer einen Endpunkt des Audiosignalkanals zu sein, während der Anfangspunkt des Audiosignalkanals der entfernte Benutzer ist.

Nach Einwahl und Aktivierung der Meßroutine, selbstverständlich wieder angeleitet durch den Meßserver, und vorzugsweise durch eine automatische Ansage des Meßservers mit einer Aufforderung, nunmehr das eigentlich zu beurteilende Audiosignal zu erzeugen, erzeugt der entfernte Benutzer an seiner Position das Audiosignal mittels eines Telephons, eines Players etc., wobei dieses Audiosignal dann über den Kanal vom entfernten Benutzer zum Meßserver über die Telephon-Schnittstelle des Meßservers übertragen wird und im Meßserver vorzugsweise durch ein nicht-intrusives Meßverfahren einer Qualitätsmessung unterzogen wird.

Ist der Meßserver mit seiner Qualitätsbeurteilung fertig, so kann er die Meßergebnisse wieder ohne weiteres dem Benutzer zurückliefern, da er nach wie vor in dem Besitz der Adresse des Benutzers ist, da der Benutzer ja auf die Internet-Plattform, die die Kommunikationsschnittstelle des Meßservers bildet, zugegriffen hatte. Der Meßserver liefert somit die Resultate wieder zurück zu dem Rechner des Benutzers oder auch per SMS auf ein Handy des Benutzers, derart, daß der Benutzer ein unmittelbares Feedback über die Qualität seines Audiosignalkanals erhält. So können jedoch auch zwei unterschiedliche Geräte vorhanden sein, also ein Gerät, das misst und ein anderes Gerät, das die Ergebnisse dem Benutzer zurücksendet.

Wird davon ausgegangen, daß der Übertragungskanal selbst, also die Telephonleitung zum Server ein relativ guter Kanal ist, und wird ferner davon ausgegangen, daß die Hauptqualitätsbeeinträchtigung nicht dieser Kanal liefert, sondern ein Endgerät des Benutzers, wie beispielsweise sein drahtloses Home-Handy, sein normales GSM- oder UMTS-Handy oder ein von ihm verwendeter Audio-Decodierer, wie beispielsweise ein MP3-Player, so kann der Benutzer unmittelbar eine Aussage über die Qualität dieser verschiedenen Endgeräte erhalten.

Dies gilt selbstverständlich auch für andere Kommunikationsgeräte des Benutzers, die Audiosignale erzeugen und zum Messserver übertragen können, und von denen eine Qualitätsmessung gewünscht ist.

Die vorliegende Erfindung ist dahingehend vorteilhaft, daß jeder eine Qualitätsbeurteilung selbst, mit dem eigenen gesprochenen Audiosignal durchführen kann, so daß der Benutzer dem ausgegebenen Meßergebnis eine hohe Glaubwürdigkeit entgegenbringen kann, da er der Messung selbst beigewohnt hat und das beurteilte Audiosignal selbst geliefert hat, beispielsweise durch Sprechen, wenn die Telephonverbindung getestet worden ist, oder durch Abspielen, wenn eine Decodierer-Qualität beurteilt werden soll. Zusätzlich wird es bevorzugt, dem Benutzer die Möglichkeit zu geben, dass er sich die beurteilte(n) Sequenz(en) nach Beendigung des Tests anhört, was die Glaubwürdigkeit durch den Benutzer erhöht.

Ein weiterer Vorteil der vorliegenden Erfindung ist darin zu sehen, daß der Benutzer durch Durchführung verschiedener Messungen z. B. mit verschiedenen Telephon-Vorwahlnummern einen einfachen und selbst realisierten Vergleich der Sprachqualität verschiedener Provider, Operatoren, Netze und Endgeräte erreichen kann.

Ein weiterer Vorteil der vorliegenden Erfindung besteht darin, daß der Benutzer ein direktes Feedback über einen beliebigen von ihm wählbaren Kanal zu einem beliebigen Zeitpunkt und vorzugsweise unmittelbar nach Abschluß der Messung erhalten kann.

Ein weiterer Vorteil der vorliegenden Erfindung besteht darin, daß das vom Benutzer gelieferte Audiosignal selbst für eine vollautomatische Messung mit einem realen Sprachstück eingesetzt wird, was wiederum die Glaubwürdigkeit der Messung für den Benutzer erhöht. Darüber hinaus hat es sich als vorteilhaft herausgestellt, dem Benutzer einen Vorschlag für die Sprachsequenz innerhalb der Kontaktierungsinformationen zu liefern, so daß der Benutzer die Scheu ablegt, in ein Telephon irgend etwas zu sagen, was er nicht genau weiß.

Darüber hinaus liefert das Bereitstellen einer geschriebenen Sprachsequenz den Vorteil, daß der Benutzer eine gute Vergleichbarkeit erzielt, wenn er verschiedene Endgeräte/Netze, Provider, etc. vergleichen will und für den Test eines jeden unterschiedlichen Set-Ups dieselbe Sprachsequenz verwendet.

Bei einem bevorzugten Ausführungsbeispiel der vorliegenden Erfindung ist das durch den Meßserver durchgeführte Meßverfahren ein nicht-intrusives Verfahren zur Messung der Qualität des Audiosignals.

Ferner wird es bevorzugt, vor der eigentlichen Messung das rohe Audiomaterial in annähernd hörtestkonforme Testsequenzen aufzubereiten. Dieser Vorgang dient dazu, jedes beliebige Audiosignal in das Meßsystem einspeisen zu können. Damit wird die Bedienbarkeit des Meßverfahrens und damit auch die Akzeptanz durch Kunden, die keine Audiospezialisten sein müssen, erheblich erhöht.

Das erfindungsgemäße Konzept zeichnet sich somit bei einem bevorzugten Ausführungsbeispiel dadurch aus, daß die zunächst völlig getrennten und unsynchronisierten Abläufe des zu testenden Telephongesprächs, der Messung der Sprachqualität eines zugrundeliegenden Kanals und eines Reports der Ergebnisse an den Benutzer koordiniert sind, wobei insbesondere die Tatsache erfindungsgemäß berücksichtigt wird, daß zwischen der Quelle, nämlich dem Verursacher des Testanrufs, also dem Benutzer, und dem Ort der Ermittlung der Sprachqualität und möglicherweise auch dem Ort der Internet-Plattform eine nicht unerhebliche geographische Distanz liegt. In diesem Zusammenhang wird darauf hingewiesen, daß der Meßserver zur Qualitätsmessung die Qualität mißt, wie das Sprachsignal (Listening Quality) des Benutzers am vom Benutzer aus gesehen fernen Ende, also beim Meßserver, wahrgenommen wird.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild einer erfindungsgemäßen Vor- richtung zur Qualitätsbeurteilung;
- Fig. 2: ein Flußdiagramm zur Darstellung des Betriebs ei- ner Vorrichtung zum Erhalten eines Qualitätsbeur- teilungsergebnisses gemäß einem bevorzugten Aus- führungsbeispiel der vorliegenden Erfindung;
- Fig. 3: eine Szenariodarstellung des erfindungsgemäßen Konzepts mit verschiedenen Audiosignalkanälen und einem Signalisierungskanal; und
- Fig. 4: ein Übersichtsdiagramm zur Erläuterung der prin- zipiellen Funktionsweise eines intrusiven Hör- tests zur Qualitätsbeurteilung eines zu testenden Systems.

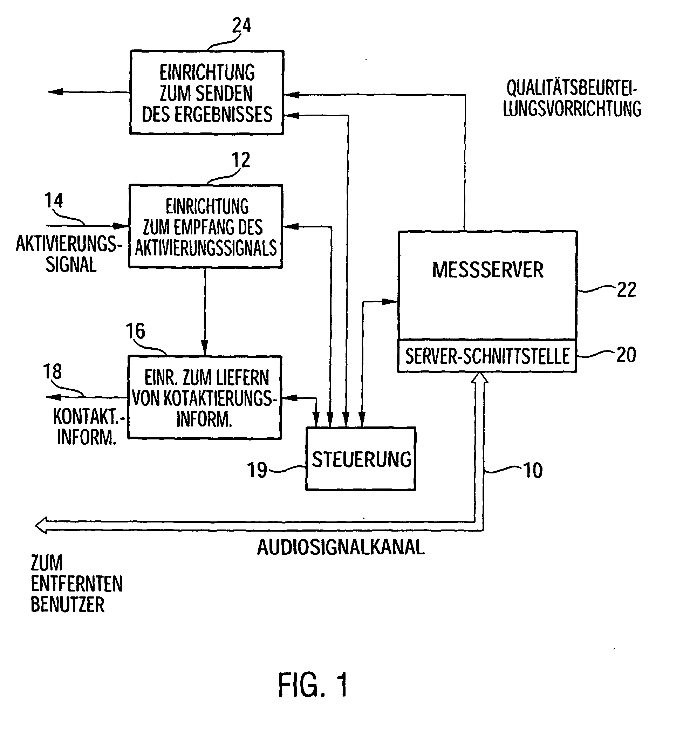

Fig. 1 zeigt ein Blockschaltbild des erfindungsgemäßen Konzepts am Beispiel einer erfindungsgemäßen Vorrichtung zur Qualitätsbeurteilung eines Audiosignals, das über einen Audiosignalkanal 10 übertragen worden ist. Die erfindungsgemäße Vorrichtung umfaßt eine Einrichtung 12 zum Empfangen eines Aktivierungssignals 14 von einem entfernten Nutzer. Ansprechend auf den Empfang des Aktivierungssignals ist eine Einrichtung 16 zum Liefern von Kontaktierungsinformationen 18, die eine Kontaktadresse umfassen, von der erfindungsgemäßen Vorrichtung zu dem entfernten Benutzer ausgebildet. Der Benutzer ist dann, wenn er die Kontaktierungsinformationen 18 hat, in der Lage, von seiner Position aus, also von seinem Endgerät aus, den Audiosignalkanal 10 zu einer Server-Schnittstelle 20 herzustellen, die mit einem Meßserver, der die eigentliche Qualitätsmessung durchführt und mit dem Bezugszeichen 22 bezeichnet ist, kommuniziert. Insbesondere ist die Schnittstelle 20 ausgebildet, um nach einem Zugriff mit der Kontaktadresse durch den entfernten Benutzer, wobei dieser Zugriff beispielsweise eine Einwahl ist, ein Endpunkt des Audiosignalkanals zu sein, wobei ein Anfangspunkt des Audiosignalkanals der entfernte Benutzer ist.

Der Meßserver 22 ist ferner ausgebildet, um das von dem entfernten Benutzer über den Audiosignalkanal 10 gelieferte Signal der Qualitätsmessung zu unterziehen.

Die erfindungsgemäße Qualitätsbeurteilungsvorrichtung umfaßt ferner eine Einrichtung 24 zum Senden eines von dem Meßserver erzeugten Qualitätsbeurteilungsergebnisses zu dem entfernten Benutzer.

Je nach Implementierung kann die Einrichtung 24 zum Senden des Ergebnisses wirksam sein, um z. B. den Internet-Kanal zwischen dem Rechner des Benutzers und den Einrichtungen 12 und 16 zu verwenden. Alternativ kann die Einrichtung 24 jedoch auch die Meßergebnisse über den Audiosignalkanal 10 zum Benutzer zurück schicken. Dies wird jedoch nicht bevorzugt, da der Benutzer dann am Telephon bleiben müßte. Daher wird es bevorzugt, den Internet-Kanal, den auch die Einrichtungen 12 und 16 benutzen, durch die Einrichtung 24 zu verwenden, oder z. B. per SMS oder E-Mail den Benutzer an seinem Postfach, seinem Handy oder seinem Festnetz-Telephon zu kontaktieren.

Das erfindungsgemäße Konzept ermöglicht es, massiv zur meßtechnischen Bewertung von realen Telephonverbindungen eingesetzt zu werden. Insbesondere unter Verwendung von nicht-intrusiven Verfahren auf dem Meßserver ermöglicht es die vorliegende Erfindung, nunmehr an fast jeder beliebigen Stelle im Netzwerk die Sprachqualität zu testen, ohne dass die Kenntnis einer Referenz benötigt wird. Durch diese zusätzliche Freiheit der Meßtechnik wird der Verbreitung dieser Meßtechnik Vorschub geleistet.

Vorzugsweise setzt der Meßserver 22 Mechanismen ein, die neben dem Meßverfahren 20 das zu messende rohe Sprachsignal in eine meßtaugliche Form bringen, beispielsweise solche Konzepte, die das Sprachsignal auf Sequenzen der Länge 8 bis 20 Sekunden formatieren und eine Möglichkeit des Rückflusses der z. B. gemessenen Qualität der Verbindung zum Interessenten gewährleisten.

Zu Zwecken der Extraktion eines Testsignalabschnitts wird zunächst die zeitliche Struktur des Audiosignals analysiert, um einen informationstragenden Abschnitt des Audiosignals von einem vorhergehenden nicht-informationstragenden Abschnitt des Audiosignals und einem nachfolgenden nicht-informationstragenden Abschnitt des Audiosignals zu unterscheiden. Auf der Basis der Analyse des Audiosignals im Hinblick auf die Detektion der informationstragenden Abschnitte wird dann ein Testsignalabschnitt basierend auf dem informationstragenden Abschnitt des Audiosignals erzeugt. Damit wird von dem Prozedere der festen Aufteilung in angrenzende Signalabschnitte weggegangen. Testsignalabschnitte werden nunmehr dahingehend gewonnen, dass das Audiosignal einer Signalanalyse im Hinblick auf seine zeitliche Struktur und im Hinblick auf seinen Informationsgehalt unterzogen wird, um basierend auf den so gewonnenen Erkenntnissen für die weitere Verarbeitung Signalausschnitte, also Testsignalabschnitte zu gewinnen, die denen von hörtestkonformen Testsequenzen weitgehend entsprechen. Die Fragmentierung des Audiosignals in Testsignalabschnitte wird daher nicht signalunabhängig sondern signalangepasst vorgenommen.

Ein Vorteil besteht darin, dass die Audiosignal-adaptive Extraktion eines Testsignalabschnitts dazu führt, dass systemimmanente Artefakte vermieden werden. Statt dessen werden hörtestkonforme Testsignalabschnitte gewonnen, die die Anwendung und Verbreitung von nicht-intrusiven Messkonzepten überhaupt erst ermöglichen.

Ein weiterer Vorteil besteht darin, dass keine DUT-Modifikationen bzw. Referenzsignale erforderlich sind, sondern dass das Konzept aus realen Audiosignalen Testsignalabschnitte erzeugt, die im Hinblick auf ihre typischerweise durch Hörtests vorgegebenen Kriterien in weiten Grenzen manipulierbar sind.

Bei einem bevorzugten Ausführungsbeispiel der vorliegenden Erfindung findet die Analyse des Audisignals durch eine Sprachaktivitätserkennung, eine Pausendetektion bzw. Rauschdetektion oder eine nachgeschaltete Spracherkennung statt.

Der Testsignalabschnitt kann, sofern die zeitlichen Längen ausreichend sind, einen kompletten informationstragenden Abschnitt des Audiosignals unmittelbar enthalten. Je nach Ausführungsform kann jedoch auch eine Manipulation an einem informationstragenden Abschnitt des Audiosignals vorgenommen werden, um beispielsweise Pausen am Beginn und am Ende eines informationstragenden Abschnitts hinzuzufügen, um eine vordefinierte Relation von z. B. Sprachmodulation zu z. B. Pause zu erzeugen.

Durch Bereitstellung eines vorbestimmten Minimalwerts für die zeitliche Länge des Testsignalabschnitts und eines vorgegebenen Maximalwerts für die zeitliche Länge eines Testsignalabschnitts ist es bei einem bevorzugten Ausführungsbeispiel der vorliegenden Erfindung möglich, auch aus längeren informationstragenden Abschnitten vorzugsweise durch langsames Ein- und Aus-Blenden dennoch Hörtest-konforme Testsignalabschnitte zu erzeugen, die im wesentlichen artefaktfrei sind, da das unnatürliche schnelle Ein- bzw. Ausschalten eines informationstragenden Abschnitts verschleiert ist.

Die beschriebene Vorverarbeitung ist insbesondere dahingehend vorteilhaft, dass sie ein beliebiges Audiosignal, das typischerweise lange Pausen hat, in eine Folge von Testsignalabschnitten umformt, von denen jede zu einem spezifizierbaren Minimalanteil aus einen informationstragenden Abschnitt des Audiosignals besteht. Damit werden gewissermaßen automatisch die üblichen langen Pausen herausgeschnitten. Eine Qualitätsbeurteilung des Übertragungskanals, von dem das Audiosignal stammt, führt diese Qualitätsbeurteilung dann nur mit sinnvollen Testsignalabschnitten durch und vergeudet nicht sinnlos Ressourcen durch den vergeblichen Versuch einer Qualitätsbeurteilung von Pausen eines Teilnehmers in beispielsweise einem Telephongespräch.

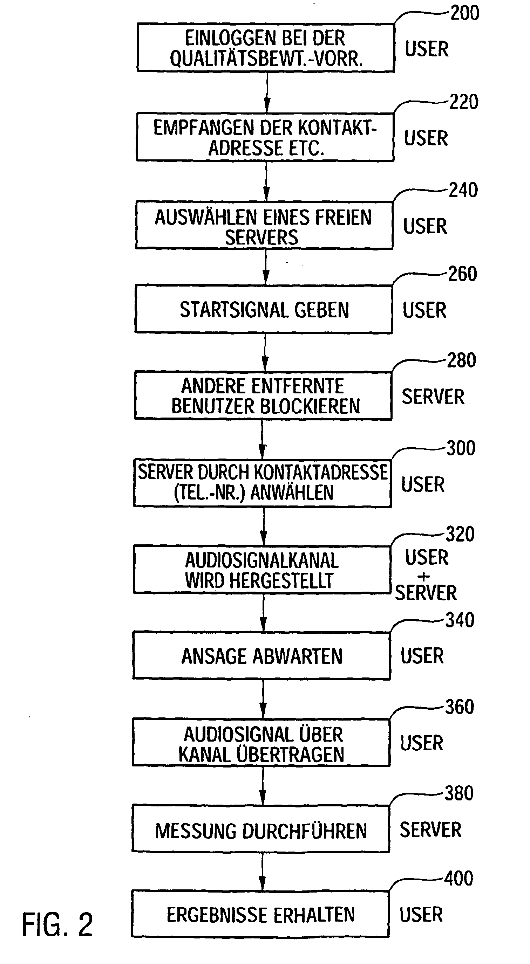

Nachfolgend wird Bezug nehmend auf Fig. 2 ein Flußdiagramm des Betriebs einer bevorzugten Vorrichtung zum Erhalten eines Qualitätsbeurteilungsergebnisses durch einen entfernten Benutzer von der Benutzerperspektive aus dargestellt.

Es sei darauf hingewiesen, daß die Benutzerperspektive spiegelbildlich zur Qualitätsbeurteilungsvorrichtungsperspektive ist. So ist in Fig. 2 neben jedem Block gekennzeichnet, ob dieser Schritt von dem Benutzer (User) oder von der Qualitätsbeurteilungsvorrichtung (Server) durchgeführt wird.

Die "Spiegelbildlichkeit" sei beispielsweise am zweiten Block dargestellt, der mit "Empfangen der Kontaktadresse" dargestellt ist. So ist aus der Sicht des Users der wesentliche Schritt an dieser Stelle, daß die Kontaktadresse empfangen wird. Dagegen ist aus der Sicht des Servers der wesentliche Schritt hier, daß die Kontaktadresse gesendet wird (durch die Einrichtung 16 von Fig. 1).

Entsprechend ist die Spiegelbildlichkeit auch z. B. beim nächsten Schritt, der mit "Auswählen eines freien Servers" gekennzeichnet ist. Der Benutzer wählt den freien Server aus, beispielsweise durch Markieren auf einer Website. Spiegelbildlich bedeutet dies für den Server, daß er die Benutzerauswahl registriert und entsprechend umsetzt.

Zunächst wird sich der Benutzer bei der Qualitätsbeurteilungsvorrichtung einloggen (20). Dies geschieht dadurch, daß beispielsweise ein Rechner eines Benutzers die URL (Webadresse) des Meßservers bzw. einer Internet-Schnittstelle des Meßservers anwählt. Daraufhin schickt diese Internet-Schnittstelle des Meßservers Daten zum Rechner, damit der Rechner die Website anzeigt. Innerhalb dieser Daten von der Internet-Schnittstelle des Meßservers befindet sich die Kontaktadresse des eigentlichen Meßservers, die der Benutzer dann, wenn die Website-Daten empfangen und angezeigt werden, empfängt (22).

Vorzugsweise existieren verschiedene Meßserver, die durch unterschiedliche Telephonnummern angewählt werden können. Bei einem bevorzugten Ausführungsbeispiel der vorliegenden Erfindung befindet sich vor jedem Eintrag für einen Messserver ein Button, der beispielsweise durch Anklicken durch den Benutzer ausgewählt wird, derart, daß der Benutzer der Internet-Schnittstelle des Meßservers mitteilt, daß er beabsichtigt, mit diesem Server zu kommunizieren. Neben einem Serversymbol befindet sich bei dem Ausführungsbeispiel auch die Telephonnummer der Server-Schnittstelle 20 (Fig. 1). Abhängig davon, wo sich die Position des Servers befindet, der angewählt ist, können nationale, lokale oder aber auch internationale Kommunikationsverbindungen mit hoher Reichweite überprüft werden. Wird beispielsweise ein Server in den Vereinigten Staaten angewählt, der die Qualitätsbeurteilung durchführen soll, so wird die Telephonleitung, also der Audiosignalkanal 10 von Fig. 1 von dem entfernten Benutzer zum Server in den Vereinigten Staaten einer Qualitätsbeurteilung unterzogen, indem das von dem Meßserver über die Server-Schnittstelle 20 von Fig. 1 empfangene Audiosignal der Qualitätsmessung unterzogen wird.

Nachdem der Benutzer den freien Server ausgewählt hat (240), was er aufgrund von Verfügbarkeitsinformationen, die ebenfalls Teil der Kontaktierungsinformationen sind, tun kann, wird dem Benutzer ein Feedback übermittelt, dahingehend, daß ihm noch einmal bestätigt wird, daß der Server tatsächlich ausgewählt worden ist und für eine Messung zur Verfügung steht.

Dann kann der Benutzer ein Startsignal geben (260), was er beispielsweise durch Klicken auf einen Start-Test-Knopf mit der Maus bewerkstelligen kann. In diesem Fall ändert sich der Inhalt der aktiven Web-Seite, um den Status des gegenwärtigen Tests zu zeigen. In diesem Fall würde der Status darin bestehen, daß der Benutzer darüber informiert wird, daß der Test gestartet worden ist. Auf Seiten des Servers wird nach dem Starten des Tests eine Blockade durchgeführt, dahingehend, daß keine anderen Benutzer mehr auf den selben Server mit den gleichen Verbindungs- bzw. Kontaktdaten zugreifen können (280).

Nunmehr wird bei einem bevorzugten Ausführungsbeispiel der vorliegenden Erfindung dem Benutzer auf der Website signalisiert, dass er die Telephonnummer anwählen soll, die - als Kontaktadresse - dem ausgewählten Server zugeordnet ist. Der Benutzer wählt dann diese Kontaktadresse an (300), derart, daß nunmehr zwischen dem Endgerät des Benutzers und der Server-Schnittstelle 20 (Fig. 1) der Audiosignalkanal 10 (Fig. 1) durch übliche Signalisierungsprotokolle entsteht, wie sie für eine analoge Telephonverbindung, eine ISDN-Telephonverbindung, eine andere Kommunikationsverbindung üblich sind (320). Sobald der Audiosignalkanal hergestellt worden ist, wird dem Benutzer von dem Server eine Willkommens-Ansage übermittelt. Der Benutzer muß die Dauer dieser Ansage abwarten, bis typischerweise ein "Piepston" kommt, damit der Benutzer nunmehr das hinsichtlich seiner Qualität zu testende Audiosignal in sein Endgerät sprechen kann bzw. von seinem Endgerät abspielen kann, damit es über den Kanal übertragen wird, wahrscheinlich von dem Kanal noch qualitätsmäßig beeinträchtigt wird, und dann über die Server-Schnittstelle dem Meßserver 22 zur Messung zugeführt wird.

Nach der Übertragung des Audiosignals über den Kanal (360) wird somit die Messung durchgeführt (380), wobei das Messgerät, wie es ausgeführt worden ist, vor der eigentlichen Qualitätsbeurteilung noch eine Vorverarbeitung durchführt, derart, daß aus dem Roh-Audiosignal hörtestkonforme Audiosignalabschnitte extrahiert werden, wie sie für eines der genannten standardgemäßen vorzugsweise nicht-intrusiven Qualitätsbeurteilungsverfahren empfehlenswert sind. Nach der Durchführung der Messung werden dann vom Meßserver die Qualitätsbeurteilungsergebnisse ausgegeben und schließlich vom Benutzer erhalten (400).

Bei einem bevorzugten Ausführungsbeispiel wird der Benutzer in der Ansage im Schritt 340 oder durch die allgemeinen Kontaktinformationen im Schritt 220 aufgefordert, z. B. wenigstens 8 Sekunden lang und höchstens z. B. 1 Minute lang zu sprechen, wobei es bevorzugt wird, daß der Benutzer wenigstens zwei Pausen macht. Ferner wird der Benutzer darauf hingewiesen, daß er in jeder Sprache sprechen kann, und daß er in der Wahl der gesprochenen Worte frei ist. Dem Benutzer wird jedoch eine Sprachsequenz vorgeschlagen, die dann besonders nützlich ist, wenn der Benutzer verschiedene Geräte oder Provider testen will, um einen Vergleich zu haben. Wird immer mit der gleichen Testsequenz gesprochen, so führt dies dazu, daß die Qualitätsbeurteilungsergebnisse nicht von der gesprochenen Sequenz abhängen.

Nachdem der Testanruf beendet ist, muß der Benutzer somit einfach das Telephon auflegen und darauf warten, bis die verarbeiteten Resultate fertig sind und typischerweise auf seinem Rechner angezeigt werden.

Um sicherzustellen, daß nicht jeder, der sich gerade auf der Website befindet, die Qualitätsergebnisse eines Benutzers sehen kann, wird es bevorzugt, daß der Benutzer beim Einloggen (Schritt 200 in Fig. 2) über einen eigenen Account geht, der durch ein von dem Benutzer gewähltes Paßwort geschützt ist, so daß kein Benutzer die Ergebnisse eines anderen Benutzers ansehen kann oder möglicherweise durch eigene Sequenzen etc. einen von einem Benutzer durchgeführten Test beeinflussen kann. Damit wird weiter die Vertrauenswürdigkeit des erfindungsgemäßen Konzepts sichergestellt, wobei die Vertrauenswürdigkeit hier von besonderer Wichtigkeit ist, da der Benutzer gemäß der vorliegenden Erfindung nicht "neben dem Meßserver" steht, sondern gewissermaßen darauf vertrauen muß, was "hinter den Kulissen", also dort, wo der Meßserver tatsächlich steht, geschieht.

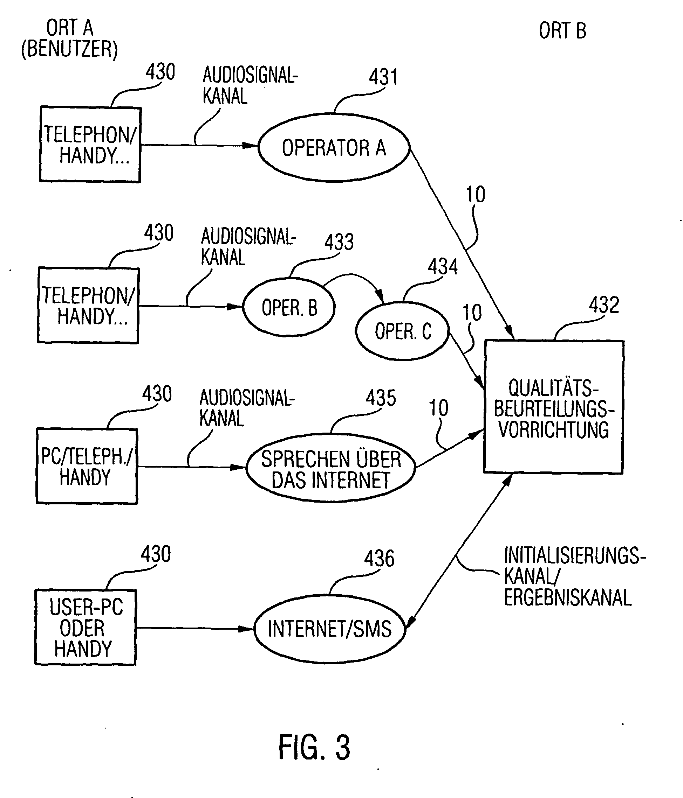

Nachfolgend wird Bezug nehmend auf Fig. 3 ein mögliches Szenario dargestellt, um die verschiedenartigen Audiosignalkanäle darzustellen, die durch das erfindungsgemäße Konzept in ihrer Qualität beurteilt werden können. Zunächst kann ein Benutzer mittels eines Telephons, Handys, etc. 430 über einen einzigen Operator 431 die Qualitätsbeurteilungsvorrichtung 432 über den Audiosignalkanal 10 kontaktieren. Dieser Fall wäre der, wenn sowohl die Qualitätsbeurteilungsvorrichtung 432 als auch der Benutzer 430 an denselben Netz-Provider angeschlossen sind, und somit nur ein einziger Operator 431 seine Hände im Spiel hat.

In einem anderen Fall würde der Nutzer 430 z. B. eine bestimmte Telephonvorwahl wählen, um zunächst mit einem Operator 433 verbunden zu sein, der zu einem Operator 434 übergibt, wenn das Gespräch beispielsweise ein Auslandsgespräch ist, wenn also die Qualitätsbeurteilungsvorrichtung 432 in einem anderen Land angeordnet ist, um z. B. eine langreichweitige Telephonverbindung hinsichtlich ihrer Qualität zu beurteilen.

Alternativ kann der Audiosignalkanal auch ein "Voice-Over-IP"-Kanal sein, also ein Sprachkanal im Internet 435, der hinsichtlich seiner Qualität beurteilt werden soll.

Zwischen der Qualitätsbeurteilungsvorrichtung 432 und dem Benutzer 430 existiert ferner ein Initialisierungskanal/Ergebniskanal, über den die Einrichtungen 24, 12 und 16 von Fig. 1 aktiv sind. Dieser Initialisierungskanal ist vorzugsweise das Internet 436 oder ein SMS-Kanal. Alternativ kann dieser Kanal jedoch auch der hinsichtlich seiner Qualität beurteilte Audiosignalkanal selbst sein, wobei es jedoch bevorzugt wird, als Initialisierungskanal/Ergebniskanal einen nicht-verbindungsorientierten Kanal zu nehmen, weil derselbe leichter und einfacher aufgebaut werden kann, und nur als Audiosignalkanal einen verbindungsorientierten Kanal zu nehmen.

Abhängig von den Gegebenheiten kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft.

## Patentansprüche

1. Vorrichtung zur Qualitätsbeurteilung eines Audiosignals, das über einen Audiosignalkanal (10) übertragen worden ist, mit folgenden Merkmalen:
einer Einrichtung (16) zum Liefern von Kontaktierungsinformationen zu einem entfernten Nutzer, wobei die Kontaktierungsinformationen eine Kontaktadresse umfassen;
einem Messserver (22) zur Qualitätsmessung des Audiosignals, wobei der Messserver (22) eine Server-Schnittstelle (20) aufweist, die ausgebildet ist, um nach einem Zugriff mit der Kontaktadresse durch den entfernten Benutzer ein Endpunkt des Audiosignalkanals (10) zu sein, wobei ein Anfangspunkt des Audiosignalkanals der entfernte Benutzer ist, und wobei der Messserver (22) ausgebildet ist, um das von dem entfernten Benutzer über den Audiosignalkanal (10) gelieferte Signal der Qualitätsmessung zu unterziehen; und
einer Einrichtung (24) zum Senden eines von dem Messserver erzeugten Qualitätsbeurteilungsergebnisses von dem Messserver zu dem entfernten Benutzer.

2. Vorrichtung nach Anspruch 1, bei der die Einrichtung (16) zum Liefern ausgebildet ist, um als Kontaktierungsinformationen ferner einen Beispieltext zu liefern, der von dem entfernten Benutzer verwendet werden kann, um auf Seiten des Benutzers das über den Audiosignalkanal (10) zu übertragende Audiosignal zu erzeugen.

3. Vorrichtung nach Anspruch 1 oder 2, bei der ferner eine Einrichtung (12) zum Empfangen eines Aktivierungssignals (14) von einem Benutzer vorhanden ist, die ausgebildet ist, um als Aktivierungssignal einen Zugriff des entfernten Benutzers über das Internet zu empfangen.

4. Vorrichtung nach einem der vorhergehenden Ansprüche, bei der die Einrichtung (16) zum Liefern ausgebildet ist, um die Kontaktierungsinformationen als Bildinformationen zu dem entfernten Benutzer zu schicken.

5. Vorrichtung nach einem der vorhergehenden Ansprüche, bei der die Einrichtung (16) zum Liefern ausgebildet ist, um als weitere Kontaktierungsinformationen einen Besetzt/Nicht-Besetzt-Status des Messservers zu dem entfernten Benutzer zu liefern.

6. Vorrichtung nach einem der vorhergehenden Ansprüche, bei der die Einrichtung (16) zum Liefern ferner ausgebildet ist, um den entfernten Benutzer eine Aufforderungsnachricht zu schicken, und um dem entfernten Benutzer ferner eine Rückkopplungsnachricht zu schicken, die dem entfernten Benutzer signalisiert, dass der entfernte Benutzer auf die Aufforderungsnachricht positiv reagiert hat.

7. Vorrichtung nach einem der vorhergehenden Ansprüche, die ferner eine Steuerung (19) aufweist, die ausgebildet ist, um im Falle einer von dem entfernten Benutzer empfangenen Startaufforderung den Messserver für Aktivierungssignale von anderen Benutzern zu blockieren.

8. Vorrichtung nach einem der vorhergehenden Ansprüche, bei der der Audiosignalkanal eine Telephonverbindung ist, und bei der die Kontaktadresse eine Telephonnummer des Messservers ist.

9. Vorrichtung nach einem der vorhergehenden Ansprüche, bei der das Audiosignal eine von dem entfernten Benutzer gesprochene Sprachnachricht umfaßt.

10. Vorrichtung nach einem der vorhergehenden Ansprüche, bei der der Messserver ausgebildet ist, um dem entfernten Benutzer nach einem Zugriff eine verbale Willkommensnachricht zu übersenden, durch die der Benutzer zur Erzeugung des Audiosignals aufgefordert wird.

11. Vorrichtung nach einem der vorhergehenden Ansprüche, bei der der Messserver ausgebildet ist, um die Qualitätsmessung nicht-intrusiv durchzuführen.

12. Vorrichtung nach einem der vorhergehenden Ansprüche, bei der der Messserver (22) ausgebildet ist, um aus dem vom entfernten Benutzer empfangenen Audiosignal eine oder mehrere Testsignalabschnitte mit vorbestimmten Eigenschaften zu extrahieren, und um dann die Qualitätsmessungen mit dem einen oder den mehreren Testsignalabschnitten durchzuführen.

13. Vorrichtung nach einem der vorhergehenden Ansprüche, bei der die Einrichtung (24) zum Senden ausgebildet ist, um die Qualitätsbeurteilungsergebnisse über das Internet oder per SMS zu dem entfernten Benutzer zu senden.

14. Vorrichtung nach einem der vorhergehenden Ansprüche, bei der die Einrichtung (12) zum Empfangen, die Einrichtung (16) zum Liefern und die Einrichtung (24) zum Senden ausgebildet sind, um über einen Kommunikationskanal mit dem entfernten Benutzer zu kommunizieren, der sich von dem Audiosignalkanal (10) unterscheidet.

15. Vorrichtung nach einem der vorhergehenden Ansprüche, bei der der Audiosignalkanal ein verbindungsorientierter Kommunikationskanal zwischen dem entfernten Benutzer und dem Messserver ist.

16. Vorrichtung nach einem der vorhergehenden Ansprüche, bei der der Audiosignalkanal einen ISDN-Kanal, einen analogen Telephonkanal, eine Funkstrecke, eine Codierer/Decodierer-Strecke oder einen Internet-Telephonie-Kanal umfaßt.

17. Vorrichtung nach einem der vorhergehenden Ansprüche, die ferner eine Einrichtung (12) zum Empfangen eines Aktivierungssignals (14) von einem entfernten Nutzer umfaßt, und
bei der die Einrichtung (16) zum Liefern von Kontaktierungsinformationen ausgebildet ist, um ansprechend auf das Aktivierungssignal die Kontaktierungsinformationen zu dem Benutzer zu liefern, von dem das Aktivierungssignal stammt.

18. Vorrichtung nach Anspruch 17, bei der das Aktivierungssignal eine Adresse des Benutzers umfaßt, an die die Kontaktierungsinformationen geliefert werden.

19. Vorrichtung zum Erhalten eines Qualitätsbeurteilungsergebnisses aus einer Qualitätsmessung eines Audiosignals, das über einen Audiosignalkanal (10) übertragen worden ist, mit folgenden Merkmalen:
einer Einrichtung (200) zum Senden eines Aktivierungssignals zu einer entfernt angeordneten Qualitätsbeurteilungsvorrichtung durch einen Nutzer, wobei das Aktivierungssignal eine Adresse des Benutzers umfaßt;
einer Einrichtung (220) zum Empfangen von Kontaktierungsinformationen von der Qualitätsbeurteilungsvorrichtung ansprechend auf ein Senden des Aktivierungssignals, wobei die Kontaktierungsinformationen eine Kontaktadresse einer Server-Schnittstelle der Qualitätsbeurteilungsvorrichtung umfassen;
einer Einrichtung (320) zum Herstellen des Audiosignalkanals zwischen dem Benutzer und der Qualitätsbeurteilungsvorrichtung unter Verwendung der Kontaktadresse;
einer Einrichtung (360) zum Senden des Audiosignals von dem Benutzer über den Audiosignalkanal (10) zu der entfernten Qualitätsbeurteilungsvorrichtung; und
einer Einrichtung (400) zum Empfangen von Qualitätsbeurteilungsergebnissen von der entfernten Qualitätsbeurteilungsvorrichtung.

20. Verfahren zur Qualitätsbeurteilung eines Audiosignals, das über einen Audiosignalkanal (10) übertragen worden ist, mit folgenden Schritten:
Liefern (16) von Kontaktierungsinformationen zu einem entfernten Nutzer, wobei die Kontaktierungsinformationen eine Kontaktadresse umfassen;
Initiieren der Herstellung des Audiosignalkanals unter Verwendung der Kontaktadresse, wobei eine Schnittstelle eines Messservers nach einem Zugriff mit der Kontaktadresse durch den entfernten Benutzer ein Endpunkt des Audiosignalkanals (10) ist, und wobei ein Anfangspunkt des Audiosignalkanals der entfernte Benutzer ist;
Unterziehen des Audiosignals einer Qualitätsmessung; und
Senden (24) eines von dem Messserver erzeugten Qualitätsbeurteilungsergebnisses von dem Messserver zu dem entfernten Benutzer.

21. Verfahren zum Erhalten eines Qualitätsbeurteilungsergebnisses aus einer Qualitätsmessung eines Audiosignals, das über einen Audiosignalkanal (10) übertragen worden ist, mit folgenden Schritten:
Senden (200) eines Aktivierungssignals zu einer entfernt angeordneten Qualitätsbeurteilungsvorrichtung durch einen Nutzer, wobei das Aktivierungssignal eine Adresse des Benutzers umfaßt;
Empfangen (220) von Kontaktierungsinformationen von der Qualitätsbeurteilungsvorrichtung ansprechend auf ein Senden des Aktivierungssignals, wobei die Kontaktierungsinformationen eine Kontaktadresse einer Server-Schnittstelle der Qualitätsbeurteilungsvorrichtung umfassen;
Herstellen (320) des Audiosignalkanals von dem Benutzer zu der Qualitätsbeurteilungsvorrichtung unter Verwendung der Kontaktadresse;
Senden (360) des Audiosignals von dem Benutzer über den Audiosignalkanal (10) zu der entfernten Qualitätsbeurteilungsvorrichtung; und
Empfangen (400) von Qualitätsbeurteilungsergebnissen von der entfernten Qualitätsbeurteilungsvorrichtung.

22. Computer-Programm mit einem Programmcode zum Durchführen des Verfahrens zur Qualitätsbeurteilung gemäß Patentanspruch 20 oder des Verfahrens zum Erhalten eines Qualitätsbeurteilungsergebnisses nach Patentanspruch 21, wenn das Computer-Programm auf einem Computer abläuft.

## Claims

1. Device for quality evaluation of an audio signal transmitted via an audio signal channel (10), comprising:
means (16) for providing contacting information to a remote user, wherein the contacting information includes a contact address;
a measurement server (22) for quality measurement of the audio signal, wherein the measurement server (22) comprises a server interface (20) designed to be a final point of the audio signal channel (10) after an access with the contact address by the remote user, wherein a starting point of the audio signal channel is the remote user, and wherein the measurement server (22) is designed to subject the signal provided by the remote user via the audio signal channel (10) to the quality measurement; and
means (24) for sending a quality evaluation result generated by the measurement server from the measurement server to the remote user.

2. Device of claim 1, wherein the means (16) for providing is designed to further provide an example text as contacting information, which may be used by the remote user to generate the audio signal to be transmitted via the audio signal channel (10) on the user side.

3. Device of claim 1 or 2, wherein there is further present means (12) for receiving an activation signal (14) from a user designed to receive an access of the remote user via the internet as activation signal.

4. Device of one of the preceding claims, wherein the means (16) for providing is designed to send the contacting information as image information to the remote user.

5. Device of one of the preceding claims, wherein the means (16) for providing is designed to provide a busy/not busy status of the measurement server to the remote user as further contacting information.

6. Device of one of the preceding claims, wherein the means (16) for providing is further designed to send a request message to the remote user and to further send a feedback message to the remote user signaling to the remote user that the remote user has reacted positively to the request message.

7. Device of one of the preceding claims, further comprising a controller (19) designed to block the measurement server for activation signals from other users in the case of a starting request received from the remote user.

8. Device of one of the preceding claims, wherein the audio signal channel is a telephone connection, and wherein the contact address is a telephone number of the measurement server.

9. Device of one of the preceding claims, wherein the audio signal includes a voice message spoken by the remote user.

10. Device of one of the preceding claims, wherein the measurement server is designed to send a verbal welcome message to the remote user after an access, by which the user is asked to generate the audio signal.

11. Device of one of the preceding claims, wherein the measurement server is designed to perform the quality measurement non-intrusively.

12. Device of one of the preceding claims, wherein the measurement server (22) is designed to extract one or more test signal portions with predetermined properties from the audio signal received from the remote user, and then to perform the quality measurements with the one or more test signal portions.

13. Device of one of the preceding claims, wherein the means (24) for sending is designed to send the quality evaluation results to the remote user via the Internet or per SMS.

14. Device of one of the preceding claims, wherein the means (12) for receiving, the means (16) for providing, and the means (24) for sending are designed to communicate with the remote user via a communication channel which is different from the audio signal channel (10).

15. Device of one of the preceding claims, wherein the audio signal channel is a connection-oriented communication channel between the remote user and the measurement server.

16. Device of one of the preceding claims, wherein the audio signal channel includes an ISDN channel, an analog telephone channel, a radio path, a coder/decoder path or an Internet telephony channel.

17. Device of one of the preceding claims, further including means (12) for receiving an activation signal (14) from a remote user, and
wherein the means (16) for providing contacting information is designed to provide the contacting information to the user from where the activation signal originated, in response to the activation signal.

18. Device of claim 17, wherein the activation signal includes an address of the user where the contacting information is supplied to.

19. Device for obtaining a quality evaluation result from a quality measurement of an audio signal transmitted via an audio signal channel (10), comprising:
means (200) for sending an activation signal to a remotely located quality evaluation device by a user, wherein the activation signal includes an address of the user;
means (220) for receiving contacting information from the quality evaluation device in response to sending the activation signal, wherein the contacting information includes a contact address of a server interface of the quality evaluation device;
means (320) for establishing the audio signal channel between the user and the quality evaluation device using the contact address;
means (360) for sending the audio signal from the user via the audio signal channel (10) to the remote quality evaluation device; and
means (400) for receiving quality evaluation results from the remote quality evaluation device.

20. Method for quality evaluation of an audio signal transmitted via an audio signal channel (10), comprising:
providing (16) contacting information to a remote user, wherein the contacting information includes a contact address;
initiating the establishment of the audio signal channel using the contact address, wherein an interface of a measurement server is a final point of the audio signal channel (10) after an access with the contact address by the remote user, and wherein a starting point of the audio signal channel is the remote user;
subjecting the audio signal to a quality measurement; and
sending (24) a quality evaluation result generated by the measurement server from the measurement server to the remote user.

21. Method for obtaining a quality evaluation result from a quality measurement of an audio signal transmitted via an audio signal channel (10), comprising:
sending (200) an activation signal to a remotely located quality evaluation device by a user, wherein the activation signal includes an address of the user;
receiving (220) contacting information from the quality evaluation device in response to sending the activation signal, wherein the contacting information includes a contact address of a server interface of the quality evaluation device;
establishing (320) the audio signal channel from the user to the quality evaluation device using the contact address;
sending (360) the audio signal from the user via the audio signal channel (10) to the remote quality evaluation device; and
receiving (400) quality evaluation results from the remote quality evaluation device.

22. Computer program with a program code for performing the method for quality evaluation of claim 20 or the method for obtaining a quality evaluation result of claim 21, when the computer program runs on a computer.

## Revendications

1. Dispositif pour évaluer la qualité d'un signal audio qui a été transmis via un canal de signal audio (10), aux caractéristiques suivantes:
un moyen (16) destiné à fournir des informations d'interconnexion à un utilisateur éloigné, les informations d'interconnexion comprenant une adresse de contact;
un serveur de mesure (22) destiné à mesurer la qualité du signal audio, le serveur de mesure (22) présentant une interface de serveur (20) qui est réalisée de manière à être, après un accès avec l'adresse de contact par l'utilisateur éloigné, un point de fin du canal de signal audio (10), un point de début du canal de signal audio étant l'utilisateur éloigné, et le serveur de mesure (22) étant réalisé de manière à soumettre le signal fourni par l'utilisateur éloigné via le canal de signal audio (10) à la mesure de qualité; et
un moyen (24) destiné à envoyer un résultat d'évaluation de qualité généré par le serveur de mesure du serveur de mesure à l'utilisateur éloigné.

2. Dispositif selon la revendication 1, dans lequel le moyen (16) destiné à fournir est réalisé de manière à fournir comme informations d'interconnexion, par ailleurs, un texte d'exemple qui peut être utilisé par l'utilisateur éloigné pour générer du côté de l'utilisateur le signal audio à transmettre via le canal de signal audio (10).

3. Dispositif selon la revendication 1 ou 2, dans lequel est par ailleurs présent un moyen (12) destiné à recevoir un signal d'activation (14) d'un utilisateur, lequel est réalisé de manière à recevoir, comme signal d'activation, un accès de l'utilisateur éloigné via Internet.

4. Dispositif selon l'une des revendications précédentes, dans lequel le moyen (16) destiné à fournir est réalisé de manière à envoyer les informations d'interconnexion sous forme d'informations d'image à l'utilisateur éloigné.

5. Dispositif selon l'une des revendications précédentes, dans lequel le moyen (16) destiné à fournir est réalisé de manière à fournir à l'utilisateur éloigné, comme autres informations d'interconnexion, un état occupé/non occupé du serveur de mesure.

6. Dispositif selon l'une des revendications précédentes, dans lequel le moyen (16) destiné à fournir est par ailleurs réalisé de manière à envoyer à l'utilisateur éloigné un message d'appel, et à envoyer à l'utilisateur éloigné par ailleurs un message de couplage rétroactif qui signale à l'utilisateur éloigné que l'utilisateur éloigné a réagi positivement au message d'appel.

7. Dispositif selon l'une des revendications précédentes, présentant par ailleurs une commande (19) qui est réalisée de manière à bloquer, dans le cas d'une demande de démarrage reçue de l'utilisateur éloigné, le serveur de mesure pour des signaux d'activation d'autres utilisateurs.

8. Dispositif selon l'une des revendications précédentes, dans lequel le canal de signal audio est une connexion téléphonique, et dans lequel l'adresse de contact est un numéro de téléphone du serveur de mesure.

9. Dispositif selon l'une des revendications précédentes, dans lequel le signal audio comprend un message vocal prononcé par l'utilisateur éloigné.

10. Dispositif selon l'une des revendications précédentes, dans lequel le serveur de mesure est réalisé de manière à envoyer à l'utilisateur éloigné après un accès un message de bienvenue verbal par lequel il est demandé à l'utilisateur de générer le signal audio.

11. Dispositif selon l'une des revendications précédentes, dans lequel le serveur de mesure est réalisé de manière à effectuer la mesure de qualité de manière non intrusive.

12. Dispositif selon l'une des revendications précédentes, dans lequel le serveur de mesure (22) est réalisé de manière à extraire du signal audio reçu de l'utilisateur éloigné un ou plusieurs segments de signal de test à propriétés prédéterminées, et à effectuer alors les mesures de qualité avec l'un ou les plusieurs segments de signal de test.

13. Dispositif selon l'une des revendications précédentes, dans lequel le moyen (24) destiné à envoyer est réalisé de manière à envoyer les résultats d'évaluation de qualité via Internet ou par SMS à l'utilisateur éloigné.

14. Dispositif selon l'une des revendications précédentes, dans lequel le moyen (12) destiné à recevoir, le moyen (16) destiné à fournir et le moyen (24) destiné à envoyer sont réalisés de manière à communiquer avec l'utilisateur éloigné via un canal de communication qui se distingue du canal de signal audio (10).

15. Dispositif selon l'une des revendications précédentes, dans lequel le canal de signal audio est un canal de communication orienté sur la connexion entre l'utilisateur éloigné et le serveur de mesure.

16. Dispositif selon l'une des revendications précédentes, dans lequel le canal de signal audio comprend un canal RNIS, un canal téléphonique analogique, un trajet radioélectrique, un trajet de codeur/décodeur ou un canal de téléphonie Internet.

17. Dispositif selon l'une des revendications précédentes, comportant par ailleurs un moyen (12) destiné à recevoir un signal d'activation (14) d'un utilisateur éloigné, et dans lequel le moyen (16) destiné à fournir des informations d'interconnexion est réalisé de manière à fournir, en réaction au signal d'activation, les informations d'interconnexion à l'utilisateur duquel provient le signal d'activation.

18. Dispositif selon la revendication 17, dans lequel le signal d'activation comporte une adresse de l'utilisateur à laquelle sont fournies les informations d'interconnexion.

19. Dispositif pour obtenir un résultat d'évaluation de qualité d'une mesure de qualité d'un signal audio qui a été transmis via un canal de signal audio (10), aux caractéristiques suivantes:
un moyen (200) destiné à envoyer par un utilisateur un signal d'activation à un dispositif d'évaluation de qualité disposé éloigné, le signal d'activation comportant une adresse de l'utilisateur;
un moyen (220) destiné à recevoir des informations d'interconnexion du dispositif d'évaluation de qualité en réaction à un envoi du signal d'activation, les informations d'interconnexion comportant une adresse de contact d'une interface de serveur du dispositif d'évaluation de qualité;
un moyen (320) destiné à établir le canal de signal audio entre l'utilisateur et le dispositif d'évaluation de qualité à l'aide de l'adresse de contact;
un moyen (360) destiné à envoyer le signal audio de l'utilisateur via le canal de signal audio (10) vers le dispositif d'évaluation de qualité éloigné; et
un moyen (400) destiné à recevoir des résultats d'évaluation de qualité du dispositif d'évaluation de qualité éloigné.

20. Procédé pour l'évaluation de qualité d'un signal audio qui a été transmis via un canal de signal audio (10), aux étapes suivantes consistant à:
fournir (16) des informations d'interconnexion à un utilisateur éloigné, les informations d'interconnexion comprenant une adresse de contact;
initier l'établissement du canal de signal audio à l'aide de l'adresse de contact, une interface d'un serveur de mesure étant, après un accès avec l'adresse de contact par l'utilisateur éloigné, un point de fin du canal de signal audio (10), et un point de début du canal de signal audio étant l'utilisateur éloigné;
soumettre le signal audio à une mesure de qualité; et
envoyer (24) un résultat d'évaluation de qualité généré par le serveur de mesure du serveur de mesure à l'utilisateur éloigné.

21. Procédé pour obtenir un résultat d'évaluation de qualité d'une mesure de qualité d'un signal audio qui a été transmis via un canal de signal audio (10), aux étapes suivantes consistant à:
envoyer (200) un signal d'activation à un dispositif d'évaluation de qualité disposé éloigné par un utilisateur, le signal d'activation comportant une adresse de l'utilisateur;
recevoir (220) des informations d'interconnexion du dispositif d'évaluation de qualité en réaction à un envoi du signal d'activation, les informations d'interconnexion comprenant une adresse de contact d'une interface de serveur du dispositif d'évaluation de qualité;
établir (320) le canal de signal audio de l'utilisateur vers le dispositif d'évaluation de qualité à l'aide de l'adresse de contact;
envoyer (360) le signal audio de l'utilisateur via le canal de signal audio (10) au dispositif d'évaluation de qualité éloigné; et
recevoir (400) des résultats d'évaluation de qualité du dispositif d'évaluation de qualité éloigné.

22. Programme d'ordinateur avec un code de programme pour réaliser le procédé pour l'évaluation de qualité selon la revendication 20 ou le procédé pour obtenir un résultat d'évaluation de qualité selon la revendication 21 lorsque le programme d'ordinateur est exécuté sur un ordinateur.
